# EUROPEAN PATENT SPECIFICATION

(11) **EP 1 662 158 B1**
(45) Date of publication and mention of the grant of the patent: **16.01.2008**
(21) Application number: 04380238.8
(22) Date of filing: 25.11.2004
(51) Int. Cl.: F16C 11/06

(54) **Ball joint device**
Kugelgelenk
Palier à rotule

(43) Date of publication of application: 31.05.2006
(73) Proprietor: Industria Auxiliar Alavesa, S.A. (Inauxa, S.A.), 01470 Amurrio (Alava) (ES)
(72) Inventor: Morales Arnaez, Agustin, 48990 Getxo Vizcaya (ES)
(74) Representative: Carvajal y Urquijo, Isabel

(56) References cited:
- EP-A- 0 481 212
- EP-A- 1 233 196
- FR-A- 2 634 839
- US-A- 3 583 775
- US-A- 4 904 106
- US-A- 5 011 321
- US-A- 5 044 811
- US-A- 5 676 485
- US-A1- 2003 081 989
- US-A1- 2004 105 722
- US-B1- 6 398 446

## Description

### Field of the Invention

The invention refers to a ball joint device of the type used in automotive industry.

### Background of the Invention

Different embodiments disclosing ball joint devices are known in the state of the art.

European patent EP 0481212 shows a ball joint with a ball head, a pivot pin and a ball joint pin housed in a joint casing with a pot-shaped interior, in which it can be moved in a pivoting manner. The ball joint is assembled in a sliding manner in a bearing joined to the joint casing. The device has an annular projection radially extending outward touching the front face of the side of the opening of the joint casing.

US2004/105722 discloses a ball-and-socket joint for a motor vehicle, especially for a rocker pendulum of a motor vehicle, provided with a housing, which is open on at least one side and into the interior space of which a bearing shell is inserted, which in turn accommodates a joint ball of a ball pivot in a slidingly movable manner. The interior space has elevations and/or depressions along its inner jacket surface or a polygonal cross section, so that the bearing shell, which is provided with an oversize in relation to the inner jacket surface, can be inserted into the housing in a positive-locking manner while its outer surface undergoes a partial plastic deformation. The inner jacket surface may have pressure zones which shorten the effective length of the elevations and/or depressions.

However, the embodiments proposed in the state of the art require a precise adjustment both in the manufacture and in the subsequent assembly of the components of the device. This high degree of precision in the manufacture is necessary because it could even occur that the assembly is not possible if the tolerances of the components are too broad or if, even in the case of being more restrictive, the manufactured parts do not comply with said design tolerances; these tolerances will also have an effect on the functioning of the device.

Ball joint devices with inappropriate tolerances cause a series of inadmissible flaws. In addition to being noticeable in a recently manufactured device, these flaws imply a premature deterioration of the device, shorten its useful life and affect the use of the device.

Another feature which ball joint devices must have is leak-tightness. Leak-tightness must be assured both through the adjustment of the components themselves of the ball joint, the design and manufacture tolerances of said components becoming important again, and through the use of auxiliary elements. These auxiliary elements are usually protective domes with their corresponding retaining or sealing elements joining said protective domes with the rest of the components of the ball joint device.

Another additional feature which ball joint devices must have is modularity, this being understood as the ability to constitute a module integrated in a system which said ball joint device is a part of. The devices known in the state of the art have a design and construction which does not facilitate this ability to be integrated in a system in a manner easily adaptable to different systems, given that to that end, they require that the system itself is modified.

### Description of the Invention

The present invention proposes a ball joint device solving the drawbacks in the state of the art set forth above.

The design of the joining means and the contact areas of the components of the ball joint device on the joint surfaces assures the leak-tightness required in this type of devices. Said joining means also allow simplifying the process of manufacturing the device, given that leaks in the contact areas are absorbed by the configuration itself of said means; the notching or grooving included in the contact areas between the casing and the ball joint seat.

The relationship between the casing and the seat can also allow the casing to be designed such that it can be adapted to different applications according to the system in which the ball joint device is going to be incorporated.

On the other hand, the casing and the seat define a housing in which the protective dome is joined at one of its ends to the ball joint device; the use of a retaining element for said protective dome is thus prevented, achieving a reduction of the cost of the device, both by decreasing the number of components and by simplifying the assembly.

According to a first aspect, the invention describes a ball joint device comprising:
a ball joint comprising a first substantially ball-shaped ball joint portion and a second ball joint portion having a rod shape;
a ball joint seat comprising:
   a seat housing to house the first ball joint portion, said seat housing being configured to allow a sliding movement of the first ball joint portion in said seat housing;
   a first seat end comprising a first seat opening configured to allow the first ball joint portion to be introduced in said seat housing;
a casing comprising:
   a casing housing to house the seat, said casing housing being configured to prevent relative movement between the casing and the seat;
   a first casing end comprising a first casing opening configured to allow the seat to be introduced in the casing housing;
the casing comprises:
   a second casing end opposite to the first casing end comprising first joining means between the casing and seat,
   an intermediate portion in the casing housing between the first casing end and
   the second casing end, said intermediate portion comprising second joining means between the casing and the seat characterized in that: the first joining means comprises a frustoconical portion in the casing and a conjugate frustoconical portion in the seat to hold the seat to the casing.

The frustoconical portion in the casing and the conjugate frustoconical portion in the seat can be provided with grooving, a striated surface, for:
assuring a fixing between the casing and the seat;
preventing relative movement between the casing and the seat;
sealing a first peripheral contact surface between the casing and the seat.

The first joining means can also comprise an annular projection in the casing and a first annular groove in the seat for holding the seat to the casing, wherein the annular projection and the annular groove can be located in a first frontal contact surface between the casing and the seat.

The second joining means can further have a grooving for:
assuring a fixing between the casing and the seat;
preventing relative movement between the casing and the seat;
compensating for shape errors of the casing;
sealing a second peripheral contact surface between the casing and the seat.

Optionally, the seat can also comprise a plurality of grooves in a first seat end to facilitate:
an assembly and disassembly of the seat in the casing;
an introduction and removal of the first ball joint portion in the seat.

The seat can also comprise a plurality of channels in an inner surface of the seat housing, said channels being configured to allow a distribution of a lubricant between the first ball joint portion and the inner surface of the seat housing.

Further, the device of the invention can comprise a protective dome to protect the ball joint device.

In that case, the device of the invention can comprise a sealing ring to hold a first end of the protective dome to the ball joint.

On the other hand, the protective dome can comprise a plurality for annular grooves in the manner of a labyrinthine seal in a contact surface between the first end and the ball joint to assure leak-tightness between the protective dome and the ball joint.

The device of the invention can further comprise:
housing means to house a second end of the protective dome, said housing means comprising:
   a second annular groove in the casing;
   a third annular groove in the seat;
to define an annular cavity having a volume equal to the volume of the second end of the protective dome for;
   assuring leak-tightness between the casing, the seat and the protective dome;
   assuring a fixing of the protective dome to the casing and the seat.

In the device of the invention, the casing can be of a material selected from:
thermoplastic plastic;
thermosetting plastic;
plastic matrix composite material;
cast iron material;
wrought iron material;
welded iron material;
aluminum;
magnesium;
and combinations thereof.

The casing can comprise a body formed by a plurality of parts.

In the device of the invention, the ball joint seat can be of a material selected from:
thermoplastic plastic;
thermosetting plastic;
alloy cast iron;
bronze;
sintered material;
aluminum;
magnesium;
and combinations thereof.

The ball joint seat and casing can be joined by means of a process selected from welding, riveting and combinations thereof.

In the device of the invention:
the second ball joint portion can be of steel;
the first ball joint portion can be of a material selected among:
   steel;
   thermosetting plastic;
   aluminum alloy;
   plastic;
and combinations thereof.

In the device of the invention, the protective dome can be of an elastomeric material selected from:
natural rubber;
synthetic rubber;
plastic;
injectable polyurethane;
and combinations thereof.

In the device of the invention, the sealing ring can be of a material selected from:
steel;
stainless steel;
natural rubber;
synthetic rubber;
plastic;
polyurethane;
and combinations thereof.

### Brief Description of the Drawings

Very briefly described below are a series of drawings aiding in better understanding the invention and which are expressly related to an embodiment of said invention presented as a non-limiting example thereof.

Figure 1 shows a cutaway view of the device of the invention showing the different components assembled.

Figure 2 shows a perspective view of the protective dome from the side of the first end of said protective dome and of the sealing ring.

Figure 3 shows a perspective view of the protective dome from the side of the second end of said protective dome.

Figure 4 shows a perspective view of the ball joint.

Figure 5 shows a perspective view of the seat from the side of the first end of said seat.

Figure 6 shows a perspective view of the seat from the side of the second end of said seat.

Figure 7 shows a perspective view of the casing from the side of the first end of said casing.

Figure 8 shows a perspective view of the casing from the side of the second end of said casing.

### Description of a Preferred Embodiment of the Invention

A preferred embodiment of the invention is described below with the aid of the figures.

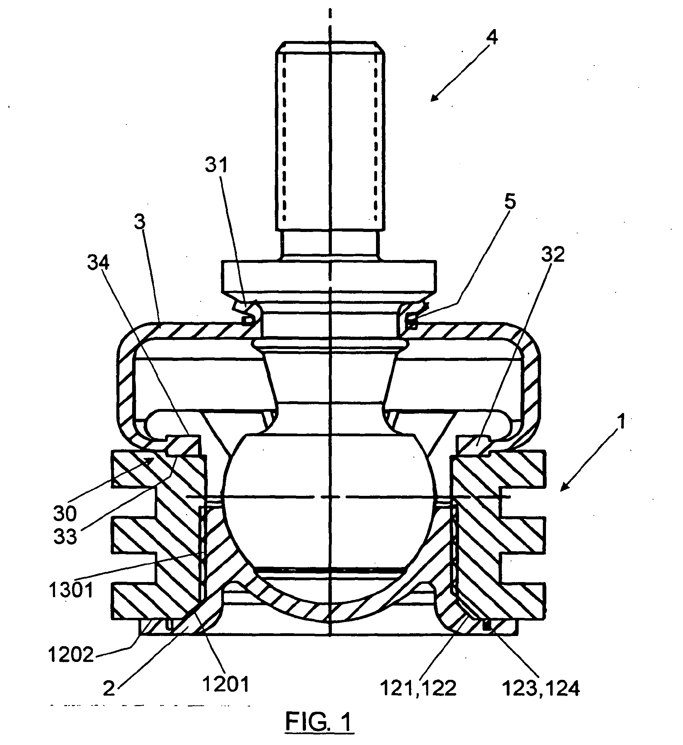

Figure 1 depicts an embodiment of the device of the invention in which the different components are shown assembled.

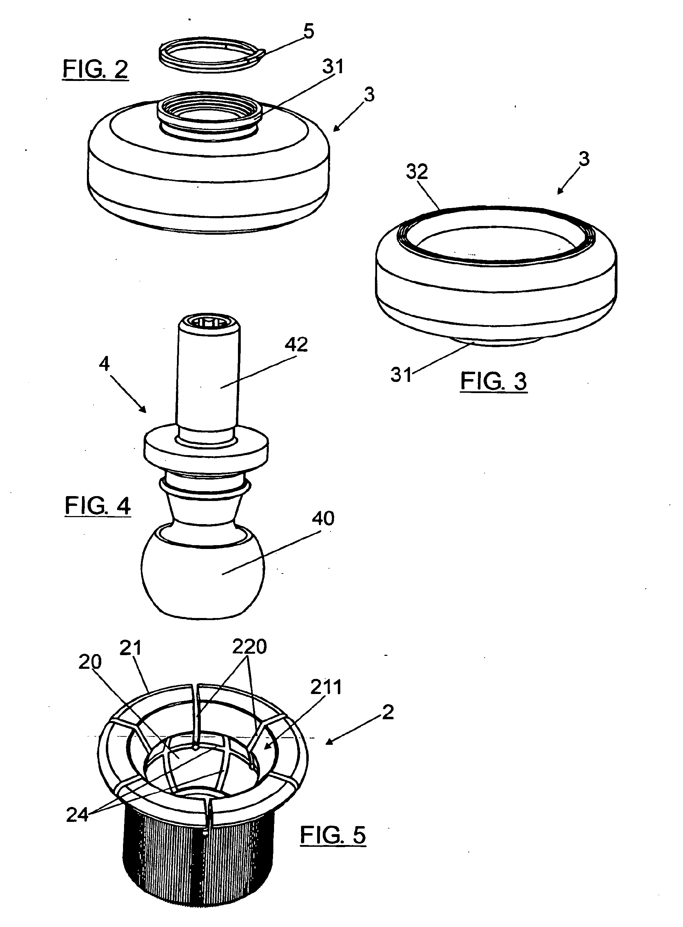

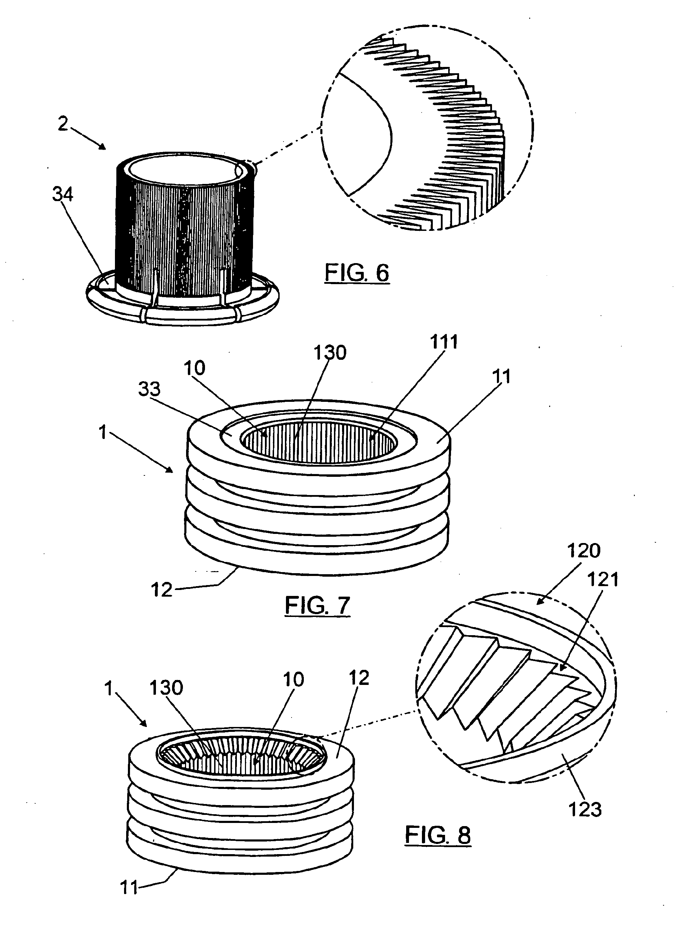

In Figures 5 and 6, the seat 2 is shown in its configuration before being assembled in the device; in Figure 1, the seat 2 after having been introduced in the housing 10 of the casing 1 can be observed. In this sense, Figures 5 and 6 show an area of the seat 2 which once formed, together with the second casing 1 end 12, constitutes the first frontal contact surface 1202 and the first peripheral contact surface 1201.

The joint between the casing 1 and the ball joint seat 2 is carried out according to the materials of said casing 1 and seat 2. If the joint between the materials is plastic-plastic, the joint will be welding; should one of the materials not be plastic, the joint will be riveting.

As can be seen in Figure 1, there are three contact surfaces 1201, 1202 and 1301 between the casing 1 and the seat 2 in which the joint between said components of the device has been carried out.

In the peripheral contact surfaces 1201 and 1301, both the casing 1 and the seat 2 incorporate notching. Figures 5 and 6 show the notching in the seat 2, whereas the notching of the casing 1 can be seen in Figures 7 and 8.

In contact surface 1202, the casing 1 incorporates an annular projection 123, whereas the seat 2 incorporates an annular groove 124. The annular groove 124 can also be carried out in the casing 1, the seat 2 then incorporating the annular projection 123.

In Figure 1, the design of the housing means 30 can be observed. Said housing means allow housing a second end 32 of the protective dome 3, preventing using an additional mechanism, such as a sealing or retention ring, to secure the second end 32 of the protective dome 3. Said housing means 30 comprise:
a second annular groove 33 in the casing 1;
a third annular groove 34 in the seat 2;

Said second annular groove 33 and third annular groove 34 define an annular cavity having a volume equal to the volume of the second end 32 of the protective dome 3. Thus, when the protective dome 3 is assembled in the device, the second end 32 becomes deformed in order to occupy the volume defined by the second annular groove 33 and third annular groove 34. With this arrangement:
the static and dynamic leak-tightness between the casing 1, the seat 2 and the protective dome 3 is assured;
a fixing of the protective dome 3 to the casing 1 and the seat 2 is assured.

In Figure 1, it can be observed how the joint of the protective dome 3 to the ball joint 4 is carried out by means of the sealing ring 5. Said joint is of the sliding type and assures the required leak-tightness and fixing in the device.

Figure 5 shows the channels 24 engraved in the inside wall or inner surface of the housing 20 of the seat 2. Said channels 24 allow for the distribution of a lubricant between the first ball joint portion 40 and the inner surface of the seat housing 20.

## Claims

1. A ball joint device comprising:
a ball joint (4) comprising a first substantially ball-shaped ball joint portion (40) and a second ball joint portion (42) having a rod shape;
a ball joint seat (2) comprising:
a seat housing (20) to house the first ball joint portion (40), said seat housing (20) being configured to allow a sliding movement of the first ball joint portion (40) in said seat housing (20);
a first seat end (21) comprising a first seat opening (211) configured to allow the first ball joint portion (40) to be introduced in said seat housing (20);
a casing (1) comprising:
a casing housing (10) to house the seat (2), said casing housing (10) being configured to prevent relative movement between the casing (1) and the seat (2);
a first casing end (11) comprising a first casing opening (111) configured to allow the seat (2) to be introduced in the casing housing (10);
the casing (1) comprises:
a second casing end (12) opposite to the first casing end (11) comprising first joining means (120) between the casing (1) and the seat (2),
an intermediate portion in the casing housing (10) between the first casing end (11) and the second casing end (12), said intermediate portion comprising second joining means (130) between the casing (1) and the seat (2) **characterized in that**: the first joining means (120) comprises a frustoconical portion (121) in the casing (1) and a conjugate frustoconical portion (122) in the seat (2) to hold the seat (2) to the casing (1).

2. - The device of claim 1, wherein the frustoconical portion (121) in the casing (1) and the conjugate frustoconical portion (122) in the seat (2) further comprise grooving for:
assuring a fixing between the casing (1) and the seat (2);
preventing relative movement between the casing (1) and the seat (2);
sealing a first peripheral contact surface (1201) between the casing (1) and the seat (2).

3. - The device of any of claims 1-2, wherein the first joining means (120) further comprise an annular projection (123) in the casing (1) and a first annular groove (124) in the seat (2) to hold the seat (2) to the casing (1), the annular projection (123) and the annular groove (124) being located in a first frontal contact surface (1202) between the casing (1) and the seat (2).

4. - The device of any of claims 1-3, wherein the second joining means (130) further comprise grooving for:
assuring a fixing between the casing (1) and the seat (2);
preventing relative movement between the casing (1) and the seat (2);
compensating for shape errors of the casing (1);
sealing a second peripheral contact surface (1301) between the casing (1) and the seat (2).

5. - The device of any of claims 1-4, wherein the seat (2) further comprises a plurality of grooves (220) in a first seat end (21) to facilitate:
an assembly and disassembly of the seat (2) in the casing (1);
an introduction and removal of the first ball joint portion (40) in the seat (2).

6. - The device of any of claims 1-5, wherein the seat (2) further comprises a plurality of channels (24) in an inner surface of the seat housing (20), said channels (24) being configured to allow a distribution of lubricant between the first ball joint portion (40) and the inner surface of the seat housing (20).

7. - The device of any of claims 1-6, further comprising:
a protective dome (3) to protect the ball joint device.

8. - The device of claim 7, further comprising:
a sealing ring (5) to hold a first end (31) of the protective dome (3) to the ball joint (4).

9. - The device of any of claims 7-8, wherein the protective dome (3) further comprises a plurality of annular grooves in the manner of a labyrinthine seal in a contact surface between the first end (31) and the ball joint (4) to assure leak-tightness between the protective dome (3) and the ball joint (4).

10. - The device of any of claims 7-9, further comprising:
housing means (30) to house a second end (32) of the protective dome (3), said housing means (30) comprising:
a second annular groove (33) in the casing (1);
a third annular groove (34) in the seat (2);
to define an annular cavity having a volume equal to the volume of the second end (32) of the protective dome (3) for:
assuring leak-tightness between the casing (1), the seat (2) and the protective dome (3);
assuring a fixing of the protective dome (3) to the casing (1) and the seat (2).

11. - The device of any of claims 1-10, wherein the casing (1) is of a material selected from:
thermoplastic plastic;
thermosetting plastic;
plastic matrix composite material;
cast iron material;
wrought iron material;
welded iron material;
aluminum;
magnesium;
and combinations thereof.

12. - The device of any of claims 1-11, wherein the casing (1) comprises a body formed by a plurality of parts.

13. - The device of any of claims 1-12, wherein the ball joint seat (2) is of a material selected from:
thermoplastic plastic;
thermosetting plastic;
alloy cast iron;
bronze;
sintered material;
aluminum;
magnesium;
and combinations thereof.

14. - The device of any of claims 1-13, wherein the casing (1) and the ball joint seat (2) are joined by means of a process selected from welding, riveting and combinations thereof.

15. - The device of any of claims 1-14, wherein:
the second ball joint portion (42) is of steel;
the first ball joint portion (40) is of a material selected from:
steel;
thermosetting plastic;
aluminum alloy;
plastic;
and combinations thereof.

16. - The device of any of claims 7-15, wherein the protective dome (3) is of an elastomeric material selected from: ,
natural rubber;
synthetic rubber;
plastic;
injectable polyurethane;
and combinations thereof.

17. - The device of any of claims 8-16, wherein the sealing ring (5) is of a material selected from:
steel;
stainless steel;
natural rubber;
synthetic rubber;
plastic;
polyurethane;
and combinations thereof.

## Patentansprüche

1. Kugelgelenkvorrichtung, die Folgendes umfasst:
ein Kugelgelenk (4), das einen ersten im Wesentlichen kugelförmigen Kugelgelenkabschnitt (40) und einen zweiten Kugelgelenkabschnitt (42) mit einer Stabform umfasst;
einen Kugelgelenksitz (2), der Folgendes umfasst:
ein Sitzgehäuse (20) zum Aufnehmen des ersten Kugelgelenkabschnitts (40), wobei dieses Sitzgehäuse (20) so konfiguriert ist, dass es eine Gleitbewegung des ersten Kugelgelenkabschnitts (40) in dem Sitzgehäuse (20) ermöglicht;
ein erstes Sitz-Ende (21), das eine erste Sitzöffnung (211) umfasst, die so konfiguriert ist, dass der erste Kugelgelenkabschnitt (40) in das Sitzgehäuse (20) eingesetzt werden kann;
eine Umfassung (1), die Folgendes umfasst:
ein Umfassungsgehäuse (10) zum Aufnehmen des Sitzes (2), wobei das Umfassungsgehäuse (10) so konfiguriert ist, dass es eine Relativbewegung zwischen der Umfassung (1) und dem Sitz (2) verhindert;
ein erstes Umfassungs-Ende (11), das eine erste Umfassungsöffnung (111) umfasst, die dafür konfiguriert ist, ein Einsetzen des Sitzes (2) in das Umfassungsgehäuse (10) zu ermöglichen;
wobei die Umfassung (1) Folgendes umfasst:
ein zweites Umfassungs-Ende (12) gegenüber dem ersten Umfassungs-Ende (11), das erste Verbindungsmittel (120) zwischen der Umfassung (1) und dem Sitz (2) umfasst;
einen Zwischenabschnitt in dem Umfassungsgehäuse (10) zwischen dem ersten Umfassungs-Ende (11) und dem zweiten Umfassungs-Ende (12), wobei der Zwischenabschnitt zweite Verbindungsmittel (130) zwischen der Umfassung (1) und dem Sitz (2) umfasst,
**dadurch gekennzeichnet, dass**
das erste Verbindungsmittel (120) einen kegelstumpfförmigen Abschnitt (121) in der Umfassung (1) und einen sich daran anschließenden kegelstumpfförmigen Abschnitt (122) in dem Sitz (2) umfasst, um den Sitz (2) an der Umfassung (1) zu halten.

2. Vorrichtung nach Anspruch 1, wobei der kegelstumpfförmige Abschnitt (121) in der Umfassung (1) und der sich daran anschließende kegelstumpfförmige Abschnitt (121) in dem Sitz (2) des Weiteren eine Riffelung umfassen, um:
eine Befestigung zwischen der Umfassung (1) und dem Sitz (2) zu gewährleisten;
eine Relativbewegung zwischen der Umfassung (1) und dem Sitz (2) zu verhindern;
eine erste umfänglich verlaufende Kontaktfläche (1201) zwischen der Umfassung (1) und dem Sitz (2) abzudichten.

3. Vorrichtung nach einem der Ansprüche 1-2, wobei die ersten Verbindungsmittel (120) des Weiteren einen ringförmigen Vorsprung (123) in der Umfassung (1) und eine erste Ringnut (124) in dem Sitz (2) umfassen, um den Sitz (2) an der Umfassung (1) zu halten, wobei der ringförmige Vorsprung (123) und die Ringnut (124) in einer ersten frontalen Kontaktfläche (1202) zwischen der Umfassung (1) und dem Sitz (2) angeordnet sind.

4. Vorrichtung nach einem der Ansprüche 1-3, wobei die zweiten Verbindungsmittel (120) des Weiteren eine Riffelung umfassen, um:
eine Befestigung zwischen der Umfassung (1) und dem Sitz (2) zu gewährleisten;
eine Relativbewegung zwischen der Umfassung (1) und dem Sitz (2) zu verhindern;
Formfehler der Umfassung (1) auszugleichen;
eine zweite umfänglich verlaufende Kontaktfläche (1301) zwischen der Umfassung (1) und dem Sitz (2) abzudichten.

5. Vorrichtung nach einem der Ansprüche 1-4, wobei der Sitz (2) des Weiteren mehrere Nuten (220) in einem ersten Sitz-Ende (21) umfasst, um Folgendes zu erleichtern:
ein Montieren und Demontieren des Sitzes (2) in der Umfassung (1);
ein Einsetzen und Herausnehmen des ersten Kugelgelenkabschnitts (40) in den bzw. aus dem Sitz (2).

6. Vorrichtung nach einem der Ansprüche 1-5, wobei der Sitz (2) des Weiteren mehrere Kanäle (24) in einer Innenfläche des Sitzgehäuses (20) umfasst, wobei diese Kanäle (24) so konfiguriert sind, dass ein Verteilen von Schmiermittel zwischen dem ersten Kugelgelenkabschnitt (40) und der Innenfläche des Sitzgehäuses (20) ermöglicht wird.

7. Vorrichtung nach einem der Ansprüche 1-6, die des Weiteren Folgendes umfasst:
eine Schutzkuppel (3) zum Schützen der Kugelgelenkvorrichtung.

8. Vorrichtung nach Anspruch 7, die des Weiteren Folgendes umfasst:
einen Dichtring (5) zum Halten eines ersten Endes (31) der Schutzkuppel (3) an dem Kugelgelenk (4).

9. Vorrichtung nach einem der Ansprüche 7-8, wobei die Schutzkuppel (3) des Weiteren mehrere Ringnuten in der Art einer Labyrinthdichtung in einer Kontaktfläche zwischen dem ersten Ende (31) und dem Kugelgelenk (4) umfasst, um eine Leckdichtigkeit zwischen der Schutzkuppel (3) und dem Kugelgelenk (4) zu gewährleisten.

10. Vorrichtung nach einem der Ansprüche 7-9, die des Weiteren Folgendes umfasst:
ein Gehäusemittel (30) zum Aufnehmen eines zweiten Endes der Schutzkuppel (3), wobei das Gehäusemittel (30) Folgendes umfasst:
eine zweite Ringnut (33) in der Umfassung (1);
eine dritte Ringnut (34) in dem Sitz (2);
um einen Ringraum zu definieren, dessen Volumen gleich dem Volumen des zweiten Endes (32) der Schutzkuppel (3) ist, um:
eine Leckdichtigkeit zwischen der Umfassung (1), dem Sitz (2) und der Schutzkuppel (3) zu gewährleisten;
eine Befestigung der Schutzkuppel (3) an der Umfassung (1) und dem Sitz (2) zu gewährleisten.

11. Vorrichtung nach einem der Ansprüche 1-10, wobei die Umfassung (1) aus einem Material besteht, das ausgewählt ist unter:
Thermoplastkunststoff;
Duroplastkunststoff;
Kunststoffmatrix-Verbundmaterial;
Gusseisenmaterial;
Schmiedeeisenmaterial;
Schweißeisenmaterial;
Aluminium;
Magnesium; und
Kombinationen davon.

12. Vorrichtung nach einem der Ansprüche 1-11, wobei die Umfassung (1) einen Grundkörper umfasst, der aus mehreren Teilen gebildet wird.

13. Vorrichtung nach einem der Ansprüche 1-12, wobei der Kugelgelenksitz (2) aus einem Material besteht, das ausgewählt ist unter:
Thermoplastkunststoff;
Duroplastkunststoff;
Legierungsgusseisen;
Bronze;
Sintermaterial;
Aluminium;
Magnesium; und
Kombinationen davon.

14. Vorrichtung nach einem der Ansprüche 1-13, wobei die Umfassung (1) und der Kugelgelenksitz (2) mittels eines Prozesses miteinander verbunden werden, der ausgewählt ist unter Schweißen, Nieten und Kombinationen davon.

15. Vorrichtung nach einem der Ansprüche 1-14, wobei:
der zweite Kugelgelenkabschnitt (40) aus Stahl besteht;
der erste Kugelgelenkabschnitt (40) aus einem Material besteht, das ausgewählt ist unter:
Stahl;
Duroplastkunststoff;
Aluminiumlegierung; Kunststoff; und
Kombinationen davon.

16. Vorrichtung nach einem der Ansprüche 7-15, wobei die Schutzkuppel (3) aus einem Elastomermaterial besteht, das ausgewählt ist unter:
Naturkautschuk;
Synthesekautschuk;
Kunststoff;
spritzfähigem Polyurethan; und
Kombinationen davon.

17. Vorrichtung nach einem der Ansprüche 8-16, wobei der Dichtring (5) aus einem Material besteht, das ausgewählt ist unter:
Stahl;
Edelstahl;
Naturkautschuk;
Synthesekautschuk;
Kunststoff;
Polyurethan; und
Kombinationen davon.

## Revendications

1. Dispositif de joint à rotule comprenant :
un joint à rotule (4) comprenant une première partie de joint à rotule (40) possédant sensiblement une forme de bille et une second partie de joint à rotule (42) possédant une forme de tige ;
un siège de joint à rotule (2) comprenant :
un logement de siège (20) pour loger la première partie de joint à rotule (40), ledit logement de siège (20) étant configuré pour permettre un mouvement coulissant de la première partie de joint à rotule (40) dans ledit logement de siège (20) ;
une première extrémité de siège (21) comprenant une première ouverture de siège (211) configurée pour permettre à la première partie de joint à rotule (40) d'être introduite dans ledit logement de siège (20) ;
un carter (1) comprenant :
un logement de carter (10) pour loger le siège (2), ledit logement de carter (10) étant configuré pour empêcher le mouvement relatif entre le carter (1) et le siège (2) ;
une première extrémité de carter (11) comprenant une première ouverture de carter (111) configurée pour permettre au siège (2) d'être introduit dans le logement de carter (10) ;
le carter (1) comprend :
une seconde extrémité de carter (12) opposée à la première extrémité de carter (11) comprenant un premier moyen de jonction (120) entre le carter (1) et le siège (2),
une partie intermédiaire (13) dans le logement de carter (10) entre la première extrémité de carter (11) et la seconde extrémité de carter (12), ladite partie intermédiaire (13) comprenant un second moyen de jonction (130) entre le carter (1) et le siège (2),
**caractérisé en ce que** :
le premier moyen de jonction (120) comprend une partie tronconique (121) dans le carter (1) et une partie tronconique conjuguée (122) dans le siège (2) pour retenir le siège (2) sur le carter (1).

2. Dispositif selon la revendication 1, dans lequel la partie tronconique (121) dans le carter (1) et la partie tronconique conjuguée (122) dans le siège (2) comprennent en outre un rainurage pour :
garantir une fixation entre le carter (1) et le siège (2) ;
empêcher le mouvement relatif entre le carter (1) et le siège (2) ;
rendre étanche une première surface de contact périphérique (1201) entre le carter (1) et le siège (2).

3. Dispositif selon l'une quelconque des revendications 1 à 2, dans lequel le premier moyen de jonction (120) comprend en outre une saillie annulaire (123) dans le carter (1) et une première rainure annulaire (124) dans le siège (2) pour retenir le siège (2) sur le carter (1), la saillie annulaire (123) et la rainure annulaire (124) étant positionnées dans une première surface de contact frontale (1202) entre le carter (1) et le siège (2).

4. Dispositif selon l'une quelconque des revendications 1 à 3, dans lequel le second moyen de jonction (130) comprend en outre un rainurage pour :
garantir une fixation entre le carter (1) et le siège (2) ;
empêcher le mouvement relatif entre le carter (1) et le siège (2) ;
compenser des erreurs de forme du carter (1) ;
rendre étanche une seconde surface de contact périphérique (1301) entre le carter (1) et le siège (2).

5. Dispositif selon l'une quelconque des revendications 1 à 4, dans lequel le siège (2) comprend en outre une pluralité de rainures (220) dans une première extrémité de siège (21) pour faciliter :
un assemblage et un désassemblage du siège (2) dans le carter (1) ;
une introduction et un retrait de la première partie de joint à rotule (40) dans le siège (2).

6. Dispositif selon l'une quelconque des revendications 1 à 5, dans lequel le siège (2) comprend en outre une pluralité de canaux (24) dans une surface intérieure du logement de siège (20), lesdits canaux (24) étant configurés pour permettre une distribution de lubrifiant entre la première partie de joint à rotule (40) et la surface intérieure du logement de siège (20).

7. Dispositif selon l'une quelconque des revendications 1 à 6, comprenant en outre :
un dôme de protection (3) pour protéger le dispositif de joint à rotule.

8. Dispositif selon la revendication 7, comprenant en outre :
une bague d'étanchéité (5) pour retenir une première extrémité (31) du dôme de protection (3) sur le joint à rotule (4).

9. Dispositif selon l'une quelconque des revendications 7 à 8, dans lequel le dôme de protection (3) comprend en outre une pluralité de rainures annulaires à la manière d'un joint à labyrinthe dans une surface de contact entre la première extrémité (31) et le joint à rotule (4) pour garantir l'étanchéité aux fuites entre le dôme de protection (3) et le joint à rotule (4).

10. Dispositif selon l'une quelconque des revendications 7 à 9, comprenant en outre :
un moyen de logement (30) pour loger une seconde extrémité (32) du dôme de protection (3), ledit moyen de logement (30) comprenant :
une deuxième rainure annulaire (33) dans le carter (1) ;
une troisième rainure annulaire (34) dans le siège (2) ;
pour définir une cavité annulaire possédant un volume égal au volume de la seconde extrémité (32) du dôme de protection (3) pour :
garantir l'étanchéité aux fuites entre le carter (1), le siège (2) et le dôme de protection (3) ;
garantir une fixation du dôme de protection (3) au carter (1) et au siège (2).

11. Dispositif selon l'une quelconque des revendications 1 à 10, dans lequel le carter (1) est d'un matériau sélectionné parmi :
un plastique thermoplastique ;
un plastique thermodurcissable ;
un matériau composite à matrice plastique ;
un matériau de fonte ;
un matériau de fer forgé ;
un matériau de fer soudé ;
l'aluminium ;
le magnésium ;
et des associations de ceux-ci.

12. Dispositif selon l'une quelconque des revendications 1 à 11, dans lequel le carter (1) comprend un corps formé par une pluralité de parties.

13. Dispositif selon l'une quelconque des revendications 1 à 12, dans lequel le siège de joint à rotule (2) est d'un matériau sélectionné parmi :
un plastique thermoplastique ;
un plastique thermodurcissable ;
une fonte alliée ;
le bronze ;
un matériau fritté ;
l'aluminium ;
le magnésium ;
et des associations de ceux-ci.

14. Dispositif selon l'une quelconque des revendications 1 à 13, dans lequel le carter (1) et le siège de joint à rotule (2) sont joints au moyen d'un processus sélectionné parmi le soudage, le rivetage et des associations de ceux-ci.

15. Dispositif selon l'une quelconque des revendications 1 à 14, dans lequel :
la seconde partie de joint à rotule (42) est faite d' acier ;
la première partie de joint à rotule (40) est faite d'un matériau sélectionné parmi :
l'acier ;
un plastique thermodurcissable ;
un alliage d'aluminium ;
un plastique ;
et des associations de ceux-ci.

16. Dispositif selon l'une quelconque des revendications 7 à 15, dans lequel le dôme de protection (3) est fait d'un matériau élastomère sélectionné parmi :
un caoutchouc naturel ;
un caoutchouc synthétique ;
un plastique ;
un polyuréthanne injectable ;
et des associations de ceux-ci.

17. Dispositif selon l'une quelconque des revendications 8 à 16, dans lequel la bague d'étanchéité (5) est faite d'un matériau sélectionné parmi :
un acier ;
un acier inoxydable ;
un caoutchouc naturel ;
un caoutchouc synthétique ;
un plastique ;
un polyuréthanne ;
et des associations de ceux-ci.
